# EUROPEAN PATENT APPLICATION

(11) **EP 2 731 377 A1**
(43) Date of publication of application: **14.05.2014**
(21) Application number: 12869901.4
(22) Date of filing: 02.03.2012
(51) Int. Cl.: H04W 28/18

(54) **METHOD AND DEVICE FOR IDENTIFYING AND OBTAINING AMBE CODING AND DECODING RATE INFORMATION IN SDP**

(71) Applicant: Huawei Technologies Co., Ltd., Shenzhen, Guangdong 518129 (CN)
(72) Inventor: ZHANG, Libin, Longgang District Shenzhen Guangdong 518129 (CN)
(74) Representative: Thun, Clemens
(86) International application number: PCT/CN2012/071855
(87) International publication number: WO 2013/127086

(57) **Abstract**

The present invention provides a method and a device for identifying and obtaining AMBE encoding and decoding rate information in an SDP. The method for identifying the AMBE encoding and decoding rate information in the SDP includes: setting an SDP, which specifically includes: in an m attribute line of the SDP, using a payload type PT value to describe AMBE encoding and decoding, and in an fmtp attribute of an a attribute line of the SDP, identifying, in a format field, a PT value same as that of the m attribute line, and identifying AMBE encoding and decoding rate information in a format specific parameter field; and sending the set SDP to a peer end. The method and the device for identifying and obtaining the AMBE encoding and decoding rate information in the SDP provided by the present invention can implement automatic rate switching in a bearer plane.

## Description

### TECHNICAL FIELD

The present invention relates to session description protocol (Session Description Protocol, SDP) technologies, in particular, to a method and a device for identifying and obtaining AMBE encoding and decoding rate information in an SDP, and belongs to the field of communications technologies.

### BACKGROUND

An advanced multiband excitation vocoder (Advanced MultiBand Excitation, AMBE) is a narrowband compression codec with a low bit rate and high quality. Because its encoding bit rate is low, a transmission bandwidth is low, so that it is widely applied in the field of satellite communications, so as to save precious satellite bandwidth resources.

AMBE is multi-rate voice compression encoding and decoding, and supports multiple rates from 1.2 kbps to 4.8 kbps, including 2.45 kbps, 4 kbps, and so on. When the AMBE is used in communication, a rate used between users may be specified through an SDP description in signaling when a session is established between the users.

In the prior art, a manner for describing AMBE encoding in an SDP is as follows:
"m=audio 6666 RTP/AVP 99
a= sendrecv
a=rtpmap:99 X-AMBE4.0/8000
a=fmtp:99
a=rtpmap:98 X-AMBE2.45/8000
a=fmtp:98
a=maxptime:40".

An original intention of the description manner is to describe that two encoding and decoding rates supporting the AMBE are 4.0 kbps and 2.45 kbps and that corresponding PT values are 99 and 98 respectively. However, when the foregoing manner is adopted to describe the AMBE encoding in the SDP, if a sender device adjusts a sending rate in a bearer plane to send a packet, a receiver device cannot recognize the corresponding packet and does not switch the rate according to

### SUMMARY

In view of defects existing in the prior art, embodiments of the present invention provide a method and a device for identifying and obtaining AMBE encoding and decoding rate information in an SDP, which are used to implement automatic rate switching in a bearer plane.

According to one aspect of the embodiments of the present invention, a method for identifying AMBE encoding and decoding rate information in an SDP is provided and includes:
setting an SDP, which specifically includes: in an m attribute line of the SDP, using a payload type PT value to describe AMBE encoding and decoding; and in an fmtp attribute of an a attribute line of the SDP, identifying, in a format field, a PT value same as that of the m attribute line, and identifying AMBE encoding and decoding rate information in a format specific parameter field; and
sending the set SDP to a peer end.

According to another aspect of the embodiments of the present invention, a method for obtaining AMBE encoding and decoding rate information in an SDP is further provided and includes:
parsing an SDP, and obtaining an m attribute line and an fmtp attribute of an a attribute line in the SDP; and
obtaining a PT value from the m attribute line, and obtaining AMBE encoding and decoding rate information from a format specific parameter field of the fmtp attribute of the a attribute line.

According to still another aspect of the embodiments of the present invention, a sender device is further provided and includes:
an SDP generating module, configured to generate an SDP, where in an m attribute line of the SDP, a payload type PT value is used to describe AMBE encoding and decoding; and in an fmtp attribute of an a attribute line of the SDP, a payload type PT value same as that of the m attribute line is identified in a format field, and AMBE encoding and decoding rate information is identified in a format specific parameter field; and
an SDP sending module, configured to send the generated SDP to a receiver device.

According to yet another aspect of the embodiments of the present invention, a receiver device is further provided and includes:
an SDP receiving module, configured to receive an SDP sent by a sender device; and
an SDP parsing module, configured to parse the SDP, obtain an m attribute line and an fmtp attribute of an a attribute line in the SDP, obtain a PT value from the m attribute line, and obtain AMBE encoding and decoding rate information from a format specific parameter field of the fmtp attribute of the a attribute line.

In the method and the device for identifying and obtaining the AMBE encoding and decoding rate information in the SDP according to the foregoing aspects of the embodiments of the present invention, in the m attribute line, only one payload type PT value is used to describe the AMBE encoding and decoding, and in the fmtp attribute of the a line, the AMBE encoding and decoding rate information is identified in the format specific parameter field, so that the sender device and the receiver device may perform effective rate negotiation in a process of establishing a session, and automatic rate switching in the bearer plane may be effectively implemented for the sender device and the receiver device that have established the session.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description are merely some embodiments of the present invention, and persons of ordinary skill in the art may further obtain other drawings according to these accompanying drawings without creative efforts.
FIG. 1 is a schematic diagram of a typical communication system;
FIG. 2 is a schematic flow chart of a method for identifying AMBE encoding and decoding rate information in an SDP according to Embodiment 1 of the present invention;
FIG. 3 is a flow chart of a first example that a caller and a callee establish a session;
FIG. 4 is a flow chart of a first example that a caller communicates with a callee when a rate is switched in a bearer plane;
FIG. 5 is a flow chart of a second example that a caller and a callee establish a session;
FIG. 6 is a flow chart of a third example that a caller and a callee establish a session;
FIG. 7 is a flow chart of a second example that a caller communicates with a callee when a rate is switched in a bearer plane;
FIG. 8 is a schematic flow chart of a method for obtaining AMBE encoding and decoding rate information in an SDP according to Embodiment 4 of the present invention;
FIG. 9 is a schematic structural diagram of a sender device according to Embodiment 6 of the present invention; and
FIG. 10 is a schematic structural diagram of a receiver device according to Embodiment 7 of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely part rather than all of the embodiments of the present invention. All other embodiments obtained by persons of ordinary skill in the art based on the embodiments of the present invention without creative efforts shall fall within the protection scope of the present invention.

### Embodiment 1

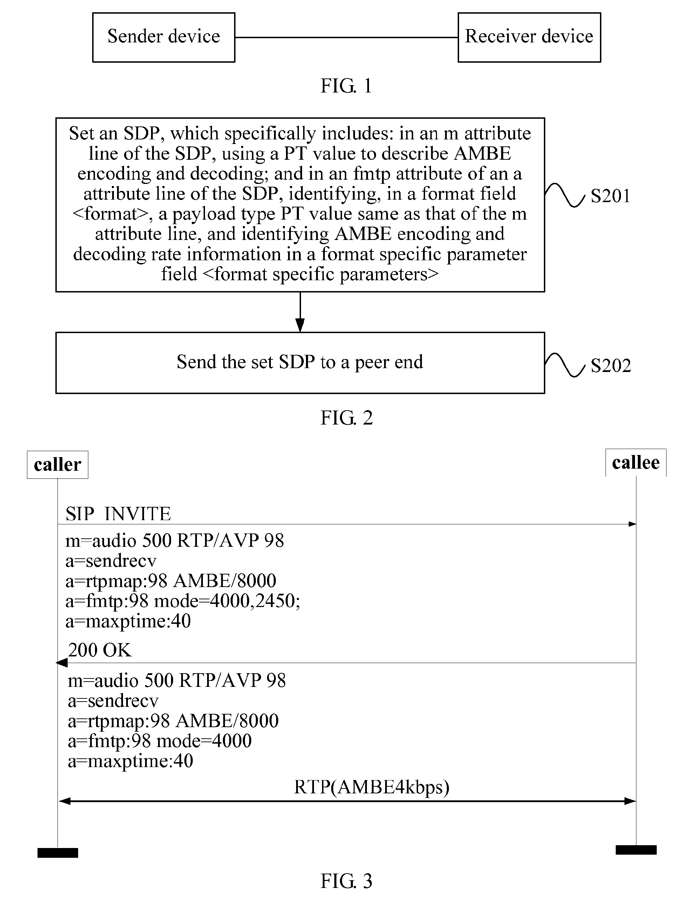

FIG. 1 is a schematic diagram of a typical communication system. As shown in FIG. 1, at least a sender device and a receiver device are included. When the sender device and the receiver device establish a session, both devices need to identify and recognize an SDP. That a method for identifying AMBE encoding and decoding rate information in an SDP according to Embodiment 1 of the present invention is executed by the sender device is taken as an example in the following to describe the method for identifying the AMBE encoding and decoding rate information in the SDP according to Embodiment 1 of the present invention from the perspective of the sender device.

FIG. 2 is a schematic flow chart of a method for identifying AMBE encoding and decoding rate information in an SDP according to Embodiment 1 of the present invention. As shown in FIG. 2, the method for identifying the AMBE encoding and decoding rate information in the SDP includes the following steps:

Step S201: Set an SDP, which specifically includes: in an m attribute line of the SDP, using a PT value to describe AMBE encoding and decoding; and in an fmtp attribute of an a attribute line of the SDP, identifying, in a format field <format>, a payload type PT value same as that of the m attribute line, and identifying AMBE encoding and decoding rate information in a format specific parameter field <format specific parameters>.

Step S202: Send the set SDP to a peer end.

Specifically, Table 1 is a typical key parameter table describing media information in an SDP (defined in the standard RFC 2327).

**Table 1**

| Attribute Line | Explanation |
|---|---|
| m=<media> <port> <transport> <fmt list> | <media> indicates a media type, such as audio and video |
| | <port> indicates port information |
| | <transport> indicates transport information |
| | <fmt list> indicates a media format |
| a=rtpmap:<payload type> <encoding name>/<clock rate> | In an rtpmap attribute of an a line: |
| | <payload type> indicates a media format and corresponds to an fmt list of an m line, and if there are multiple fmt lists, there will be multiple corresponding rtpmaps of the a line for describing each media format. |
| | <encoding name> indicates an encoding and decoding name, such as AMR and G722 |
| | <clock rate> indicates a clock frequency, where a clock frequency of a narrow band is 8000, and a clock frequency of a wide band is 16000 |
| a=fmtp:<format> <format specific parameters> | In an fmtp attribute of an a line: |
| | <format> indicates a media format and corresponds to an fmt list of an m line, and if there are multiple fmt lists, there will be multiple corresponding rtpmaps of the a line for describing each media format. |
| | <format specific parameters> indicates special description for an encoding format |
| a=ptime:<packet time> | In a ptime attribute of an a line: <packet time> indicates a package duration |

As described in Table 1, when the media information is described in the SDP, an m attribute line and a attribute lines are included. The m attribute line is used to describe a media type, port information, transport information, and a media format; multiple a attribute lines are used to describe the rtpmap attribute, the fmtp attribute and the ptime attribute respectively.

In the method for identifying the AMBE encoding and decoding rate information in the SDP according to this embodiment, in the <fmt list> field of the m attribute line in the SDP, a PT value is used to describe the AMBE encoding and decoding, and if the PT value is generated dynamically, the PT value may be any value conforming to protocol specification. Correspondingly, for one PT value, the SDP includes only one "a=fmtp:<format> <format specific parameters>" attribute line, which is used to specifically describe the PT value described in the <fmt list> field of the m attribute line. More specifically, in the "a=fmtp:<format> <format specific parameters>" attribute line, the PT value of the m attribute line is identified in the <format> field, supported AMBE encoding and decoding rate information is identified in the <format specific parameters> field.

An example of identifying the AMBE encoding and decoding rate information in the SDP is shown as follows:
"m=audio 500 RTP/AVP 98
a=rtpmap:98 X-AMBE/8000
a=fmtp:98 mode-set=4000,2450
a=maxptime:40".

Meaning of each attribute line in the SDP in the foregoing example is specifically described as follows:
"m=audio 500 RTP/AVP 98" attribute line: Media information is described as audio (audio), a port number is described as 500, a protocol is described as a real-time transport protocol (RTP), a profile is described as an approximate vertical profile (Approximate Vertical Profile, AVP), and a media format is described as audio with a PT value of 98;
"a=rtpmap:98 X-AMBE/8000" attribute line: Encoding and decoding with a PT value of 98 is described as AMBE encoding and decoding (X indicates that no definition exists in an existing standard), and a sampling frequency is described as 8000;
"a=fmtp:98 mode-set=4000,2450" attribute line: Encoding and decoding rates used for the AMBE encoding and decoding are described as 4000 bps and 2450 bps; it should be noted that, 4000 bps and 2450 bps are merely taken as examples for description in the embodiment of the present invention, and persons skilled in the art should understand that, the encoding and decoding rates used for the AMBE encoding and decoding are not limited in the embodiment of the present invention; and
"a=maxptime:40" attribute line: When AMBE encoding and decoding transport is described, a maximum duration of a packet is 40 ms.

In the foregoing example, that in the fmtp attribute of the a attribute line, an AMBE encoding and decoding rate value is directly identified by using "mode-set" as a keyword in the <format specific parameters> field is taken as an example for description, which is merely taken as an example, and is not intended to limit the method for identifying the AMBE encoding and decoding rate information in the SDP according to this embodiment, that is, any keyword may be adopted to indicate the AMBE encoding and decoding rate information, for example, "mode", other forms of rate information besides the AMBE encoding and decoding rate value may be identified, and an indication form of the AMBE encoding and decoding rate value may also be set randomly as required, for example, "a=fmtp:98 mode-set=4,245" is adopted to describe the AMBE encoding and decoding rates 4 kbps and 2.45 kbps.

A basic procedure for the sender device and the receiver device to use the AMBE encoding and decoding for communication is described in an exemplary manner in the following in combination with the foregoing SDP example, where the sender device is, for example, a caller (caller), the receiver device is, for example, a callee (callee), and the caller and the callee may be not only a terminal but also other network elements capable of implementing the AMBE encoding and decoding.

FIG. 3 is a flow chart of a first example that a caller and a callee establish a session. As shown in FIG. 3, the caller and the callee perform AMBE encoding and decoding media information exchange based on session initiation protocol (Session Initiation Protocol, SIP) signaling. The caller carries AMBE encoding and decoding information in an SIP invite (SIP INVITE) message. Specifically, two rate values, namely rates 4000 bps and 2450 bps, of the AMBE encoding and decoding are described in the fmtp attribute. SIP INVITE of the caller is sent to a called side, and the callee returns a selected encoding and decoding rate of 4000 bps in a 200OK response to SIP INVITE, so that the users at two sides adopt AMBE 4 kbps to establish a call and perform a conversation, and during the conversation, a PT value in an RTP packet header of an RTP media packet is 98.

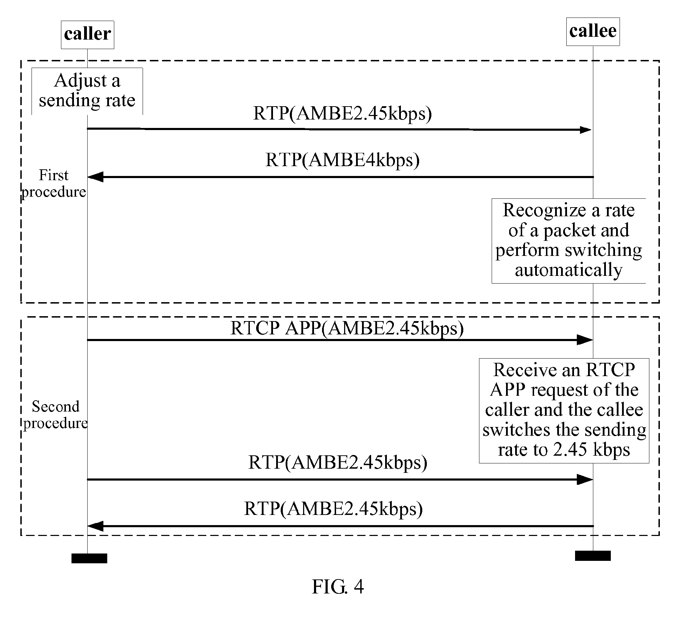

FIG. 4 is a flow chart of a first example that a caller communicates with a callee when a rate is switched in a bearer plane. As shown in FIG. 4, in a first procedure: After adjusting a sending rate in the bearer plane automatically, the caller sends a 2.45 kbps media packet to the callee, where a media packet payload PT value in an RTP header of the RTP packet is also 98; and after receiving the packet, the callee checks the PT value, and considers that the packet also belongs to the call established in FIG. 3 because the PT value is not changed, and then the callee recognizes a rate of the packet, and finds that the rate is changed to 2.45 kbps, so the callee switches the AMBE encoding and decoding rate automatically. The callee may not only recognize the rate of the packet through rate information indicated in the packet, but also recognize the rate of the packet through a size of the packet. In a second procedure: The caller requests the callee to send a 2.45 kbps packet based on an RTP control protocol application packet (RTCP APP), the callee responds to the rate request, and also switches a rate of a sent media packet to 2.45 kbps. Then, the caller receives the 2.45 kbps packet, and performs automatic rate switching, where the switching is consistent with that of the callee.

In the method for identifying the AMBE encoding and decoding rate information in the SDP according to this embodiment, only one PT value is set in the m attribute line, and for the PT value, only one "a=fmtp:<format> <format specific parameters>" attribute line is included, so after the caller adjusts the sending rate automatically in the bearer plane, the callee can still recognize the packet through the PT value, and perform rate switching automatically. Therefore, a defect that when different PT values are adopted to describe different rates, the sender device adjusts the sending rate in the bearer plane so that the receiver device does not recognize the packet and cannot perform rate switching automatically is avoided.

According to the method for identifying the AMBE encoding and decoding rate information in the SDP according to this embodiment, in the m attribute line, only one payload type PT value is used to describe the AMBE encoding and decoding, and in the fmtp attribute of the a line, the AMBE encoding and decoding rate information is identified in the format specific parameter field, so that the sender device and the receiver device may perform effective rate negotiation in a process of establishing a session, and automatic rate switching in the bearer plane may be effectively implemented for the sender device and the receiver device that have established the session.

### Embodiment 2

On the basis of Embodiment 1, a specific form of the AMBE encoding and decoding rate information identified in the <format specific parameters> field in the fmtp attribute of the SDP is extensionally described.

In this embodiment, the identifying the AMBE encoding and decoding rate information in the format specific parameter field specifically includes:
identifying an AMBE encoding and decoding rate mode code in the format specific parameter field, where the AMBE encoding and decoding rate mode code corresponds to an AMBE encoding and decoding rate value.

Another example of identifying the AMBE encoding and decoding rate information in the SDP is shown as follows:
"m=audio 500 RTP/AVP 98
a=rtpmap:98 X-AMBE/8000
a=fmtp:98 mode-set=0,1
a=maxptime:40".

In the foregoing example, the keyword "mode-set" is used to describe an encoding and decoding rate mode supported by the AMBE encoding and decoding, and encoding and decoding rate modes correspond to specific encoding and decoding rates in a one-to-one manner. Specifically, correspondence between an encoding and decoding rate mode and an encoding and decoding rate is, for example, that a corresponding rate of a mode "0" is 4.0 kbps and a corresponding rate of a mode "1" is 2.45 kbps, or a corresponding rate of a mode "1" is 4.0 kbps and a corresponding rate of a mode "0" is 2.45 kbps. In an actual application, in addition to these two encoding and decoding rates, other AMBE encoding and decoding rates may also be specified in this manner as long as an encoding and decoding rate mode corresponds to an encoding and decoding rate, and specific correspondence is not limited.

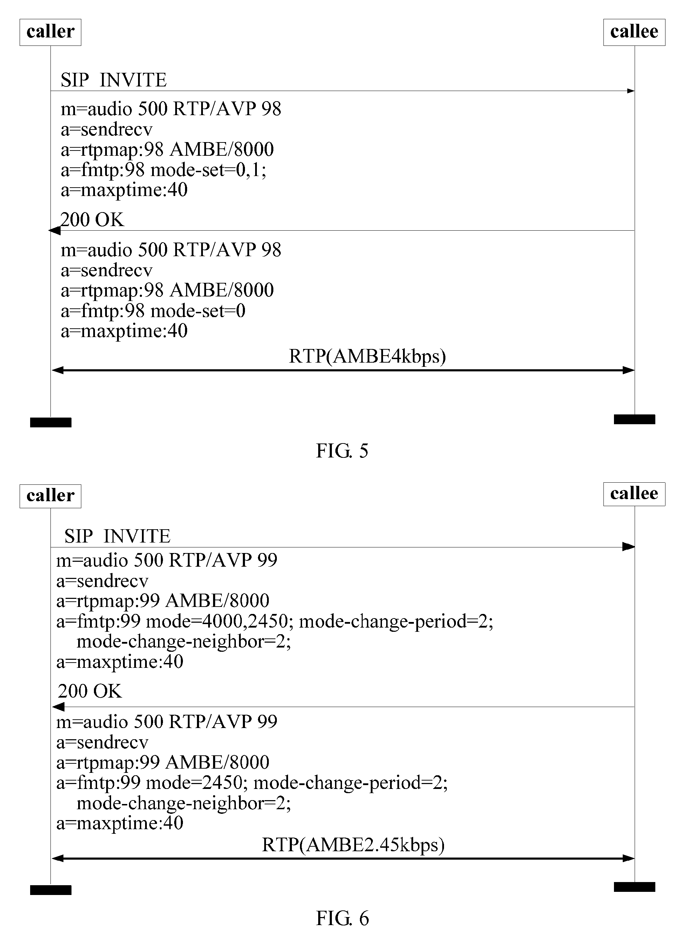

FIG. 5 is a flow chart of a second example that a caller and a callee establish a session. As shown in FIG. 5, the caller and the callee perform AMBE encoding and decoding media information exchange based on SIP signaling. The caller carries AMBE encoding and decoding information in SIP INVITE, specifically, the caller and the callee pre-agree correspondence between an encoding and decoding rate mode and an encoding and decoding rate. The caller describes two rate modes of the AMBE encoding and decoding in the fmtp attribute, that is, a mode "0" and a mode "1". SIP INVITE of the caller is sent to a called side, and the callee obtains, by parsing, the mode "0" and the mode "1" from the SDP, and acquires, by querying the pre-agreed correspondence, that a supported encoding and decoding rate includes 4.0 kbps and 2.45 kbps. If the callee selects to communicate at the 4.0 kbps rate, the callee returns the rate mode "0" corresponding to the selected encoding and decoding rate in a 200OK response to SIP INVITE, so users at the two sides adopts AMBE 4.0 kbps to establish a call and perform a conversation.

When the method in this embodiment is adopted to describe the SDP, the flow chart that the caller communicates with the callee when the rate is switched in the bearer plane is the same as that of Embodiment 1 (as shown in FIG. 4), which is not repeatedly described here.

### Embodiment 3

On the basis of Embodiment 1, the method for identifying the AMBE encoding and decoding rate information in the SDP further includes: identifying AMBE encoding and decoding rate switching information in the <format specific parameters> field of the fmtp attribute of the a attribute line in the SDP.

The AMBE encoding and decoding rate switching information includes, for example, a minimum AMBE encoding and decoding rate switching time interval, an AMBE encoding and decoding rate switching constraint, and/or an AMBE encoding and decoding rate switching direction.

Specifically, for example, a keyword "mode-change-period" indicates a minimum time interval during rate switching, that is, the minimum number of frames after which switching can be performed. If the parameter is not set, the switching is not limited. For example, the value being equal to 2 indicates that switching can be performed once after at least two frames.

A keyword "mode-change-neighbor" indicates a constraint of the rate switching. A value range of the keyword is "0" or "1", where "0" or not setting the parameter indicates that the rate may be switched randomly between modes, and "1" indicates that only an adjacent rate can be switched to during the switching.

A keyword "mode-change-direction" indicates a direction of the rate switching. These directions include "0" and "1", where "0" indicates that only a low rate can be switched to, and "1" or not setting the keyword indicates that both a low rate and a high rate can be switched to.

Still another example of identifying the AMBE encoding and decoding rate information in the SDP is shown as follows:
"m=audio 500 RTP/AVP 99
a=rtpmap:99 AMBE/8000
a=fmtp:99 mode=4000,2450; mode-change-period=2; mode-change-neighbor =1;mode-change-direction=0
a=maxptime:40".

Meaning of each attribute line in the SDP in the foregoing example is specifically described as follows:
"m=audio 500 RTP/AVP 99" attribute line: Media information is described as audio (audio), a port number is described as 500, a protocol is described as a real-time transport protocol (RTP), a profile is described as an approximate vertical profile (Approximate Vertical Profile, AVP), and a media format is described as audio with a PT value of 99;
"a=rtpmap:99 AMBE/8000" attribute line: Encoding and decoding with a PT value of 99 is described as the AMBE encoding and decoding and a sampling frequency is described as 8000; and
"a=fmtp:99 mode=4000,2450; mode-change-period=2; mode-change-neighbor=1; mode-change-direction=0" attribute line: Encoding and decoding rates used for the AMBE encoding and decoding are described as 4000 bps and 2450 bps, the switching can be performed only at an interval of at least two frames and a multiple of two frames, the switching can be performed between any rates, and the rate can only be switched to a low rate; and
"a=maxptime:40" attribute line: When AMBE encoding and decoding transport is described, a maximum duration of a packet is 40 ms.

In the foregoing example, that in the fmtp attribute of the a attribute line, in the <format specific parameters> field, the minimum AMBE encoding and decoding rate switching time interval is identified by using the "mode-change-period" as a keyword, the AMBE encoding and decoding rate switching constraint is identified by using the "mode-change-neighbor" as a keyword, and the AMBE encoding and decoding rate switching direction is identified by using the "mode-change-direction" as a keyword is taken as an example for description, which is merely taken as an example, and is not intended to limit the method for identifying the AMBE encoding and decoding rate information in the SDP according to this embodiment, that is, any other keywords may be adopted to identify the foregoing several kinds of AMBE encoding and decoding rate switching information, for example, a keyword "mode-change-neighbor" or "mode-change" is adopted as a keyword to identify the AMBE encoding and decoding rate switching direction, and other forms of rate switching information besides the foregoing several kinds of AMBE encoding and decoding rate switching information may further be identified, which may be set randomly as required.

FIG. 6 is a flow chart of a third example that a caller and a callee establish a session. As shown in FIG. 6, the caller and the callee perform AMBE encoding and decoding media information exchange based on Session Initiation Protocol SIP signaling. The caller carries AMBE encoding and decoding information in SIP INVITE. Specifically, in the fmtp attribute, two rate values, namely rates 4000 bps and 2450 bps, of the AMBE encoding and decoding are described through "mode=4000,2450", that the switching can be performed at an interval of at least two frames and a multiple of two frames during rate switching is described through "mode-change-period=2", and that the rate can only be switched to a low speed based on a current rate during rate switching is described through "mode-change-neighbor=2". SIP INVITE of the caller is sent to a called side, and the callee returns a selected encoding and decoding rate of 2450 bps in a 200OK response to SIP INVITE, so that the users at two sides adopt AMBE 2450 bps to establish a call and perform a conversation, and during the conversation, a PT value in an RTP packet header of a 2450 bps RTP media packet is 99. In the session, it is limited at the same time that the switching can be performed at the interval of at least two frames and the rate can only be switched to the low rate based on the current rate but cannot be switched to a high rate.

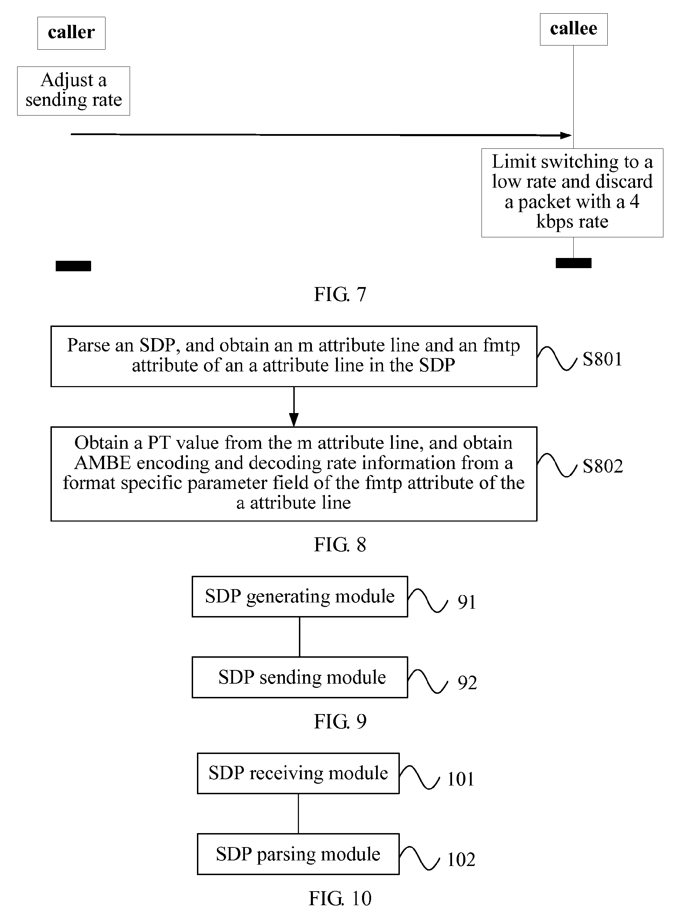

FIG. 7 is a flow chart of a second example that a caller communicates with a callee when a rate is switched in a bearer plane. As shown in FIG. 7, after the caller adjusts a sending rate in the bearer plane automatically, the sending rate of the caller and a receiving rate of the callee are switched to 2.45 kbps. In this case, if the callee still sends a 4 kbps media packet to the callee, a media packet payload PT value in an RTP header of the RTP packet is also 99 (in initial negotiation of the new session, the PT value of the AMBE is 99). After receiving the packet, the callee checks the PT value, and considers that the packet also belongs to the call established in FIG. 3 or FIG. 5 because the PT value is not changed, and then the callee recognizes a rate of the packet, and finds that the rate is changed to 4 kbps; but because it is limited in the session that the rate cannot be switched to a high rate and can only be switched to a low rate, the callee cannot automatically switch the AMBE encoding and decoding rate, and discards the packet with the 4 kbps rate, so the rate switching fails. Moreover, if the rate switching direction is not limited in the session, the callee needs to judge whether an interval between current time and last rate switching is less than two frames or a multiple of two frames, and if yes, the rate switching is performed after two frames or a multiple of two frames.

According to the method for identifying the AMBE encoding and decoding rate information in the SDP in this embodiment, the AMBE encoding and decoding rate switching information is further described in the SDP, thereby effectively limiting and constraining the rate switching in the bearer plane in the session conveniently and flexibly.

### Embodiment 4

That a method for obtaining AMBE encoding and decoding rate information in an SDP according to Embodiment 4 of the present invention is executed by a receiver device is taken as an example in the following to describe the method for obtaining the AMBE encoding and decoding rate information in the SDP according to Embodiment 4 of the present invention from the perspective of the receiver device.

FIG. 8 is a schematic flow chart of a method for obtaining AMBE encoding and decoding rate information in an SDP according to Embodiment 4 of the present invention. As shown in FIG. 8, the method for identifying the AMBE encoding and decoding rate information in the SDP includes the following steps:

Step S801: Parse an SDP, and obtain an m attribute line and an fmtp attribute of an a attribute line in the SDP.

Step S802: Obtain a PT value from the m attribute line, and obtain AMBE encoding and decoding rate information from a format specific parameter field of the fmtp attribute of the a attribute line.

The SDP received and parsed by the receiver device is, for example, identified and formed by a sender device according to the method according to any one of the foregoing embodiments, and is not repeatedly described here. A specific parsing method and parameter extraction may be implemented by adopting any method in the prior art, and are not limited here.

According to the method for obtaining the AMBE encoding and decoding rate information in the SDP according to this embodiment, in the m attribute line, only one payload type PT value is used to describe the AMBE encoding and decoding, and in the fmtp attribute of the a line, the AMBE encoding and decoding rate information is identified in the format specific parameter field, so that the sender device and the receiver device may perform effective rate negotiation in a process of establishing a session, and automatic rate switching in the bearer plane may be effectively implemented for the sender device and the receiver device that have established the session.

Furthermore, the obtaining the AMBE encoding and decoding rate information from the format specific parameter field of the fmtp attribute of the a attribute line specifically includes:
obtaining an AMBE encoding and decoding rate mode code from the format specific parameter field of the fmtp attribute of the a attribute line; and
obtaining an AMBE encoding and decoding rate value by querying correspondence between the AMBE encoding and decoding rate mode code and the AMBE encoding and decoding rate value.

Furthermore, the obtaining the AMBE encoding and decoding rate information from the format specific parameter field of the fmtp attribute of the a attribute line specifically includes:
obtaining an AMBE encoding and decoding rate value from the format specific parameter field of the fmtp attribute of the a attribute line.

### Embodiment 5

On the basis of Embodiment 4, the method for obtaining the AMBE encoding and decoding rate information in the SDP further includes: obtaining AMBE encoding and decoding rate switching information from the format specific parameter field of the fmtp attribute of the a attribute line.

The obtaining the AMBE encoding and decoding rate switching information from the format specific parameter field of the fmtp attribute of the a attribute line specifically includes:
obtaining a minimum AMBE encoding and decoding rate switching time interval, an AMBE encoding and decoding rate switching constraint, and/or an AMBE encoding and decoding rate switching direction from the format specific parameter field of the fmtp attribute of the a attribute line.

The SDP in this embodiment is obtained, for example, by adopting the method described in Embodiment 3, and a specific procedure is not repeatedly described here.

According to the method for obtaining the AMBE encoding and decoding rate information in the SDP in this embodiment, the described AMBE encoding and decoding rate switching information is further obtained from the SDP, so that rate switching may be executed conveniently and flexibly according to a limitation and a constraint of rate switching in a bearer plane in a session.

### Embodiment 6

FIG. 9 is a schematic structural diagram of a sender device according to Embodiment 6 of the present invention. As shown in FIG. 9, the sender device includes:
an SDP generating module 91, configured to generate an SDP, where in an m attribute line of the SDP, a payload type PT value is used to describe AMBE encoding and decoding; and in an fmtp attribute of an a attribute line of the SDP, a payload type PT value same as that of the m attribute line is identified in a format field, and AMBE encoding and decoding rate information is identified in a format specific parameter field; and
an SDP sending module 92, configured to send the generated SDP to a receiver device.

A procedure of identifying, by the sender device, the AMBE encoding and decoding rate information in the SDP according to this embodiment is the same as that in Embodiment 1, and is not repeatedly described here.

The sender device may be a terminal, and may also be any other network elements capable of implementing the AMBE encoding and decoding.

According to the sender device in this embodiment, when the SDP is generated, in the m attribute line, only one payload type PT value is used to describe the AMBE encoding and decoding, and in the fmtp attribute of the a line, the AMBE encoding and decoding rate information is identified in the format specific parameter field, so that the sender device and the receiver device may perform effective rate negotiation in a process of establishing a session, and automatic rate switching in a bearer plane may be effectively implemented for the sender device and the receiver device that have established the session.

Furthermore, the AMBE encoding and decoding rate information includes an AMBE encoding and decoding rate value, or an AMBE encoding and decoding rate mode code corresponding to the AMBE encoding and decoding rate value.

Furthermore, the SDP generating module is further configured to identify AMBE encoding and decoding rate switching information in the format specific parameter field.

Furthermore, the AMBE encoding and decoding rate switching information includes a minimum AMBE encoding and decoding rate switching time interval, an AMBE encoding and decoding rate switching constraint, and/or an AMBE encoding and decoding rate switching direction.

The sender device may conveniently and flexibly perform an effective limitation and constraint on the rate switching in the bearer plane in the session by identifying the AMBE encoding and decoding rate switching information in the SDP.

### Embodiment 7

FIG. 10 is a schematic structural diagram of a receiver device according to Embodiment 7 of the present invention. As shown in FIG. 10, the receiver device includes:
an SDP receiving module 101, configured to receive an SDP sent by a sender device; and
an SDP parsing module 102, configured to parse the SDP, obtain an m attribute line and an fmtp attribute of an a attribute line in the SDP, obtain a PT value from the m attribute line, and obtain AMBE encoding and decoding rate information from a format specific parameter field of the fmtp attribute of the a attribute line.

A procedure of obtaining, by the receiver device, the AMBE encoding and decoding rate information in the SDP according to this embodiment is the same as that in Embodiment 4, and is not repeatedly described here.

The receiver device may be a terminal, and may also be any other network elements capable of implementing the AMBE encoding and decoding.

According to the receiver device in this embodiment, when the SDP is parsed, a PT value is obtained from the m attribute line and the AMBE encoding and decoding rate information is obtained in the format specific parameter field from the fmtp attribute of the a line, so that the sender device and the receiver device may perform effective rate negotiation in a process of establishing a session, and automatic rate switching in a bearer plane may be effectively implemented for the sender device and the receiver device that have established the session.

Furthermore, the AMBE encoding and decoding rate information includes an AMBE encoding and decoding rate value, or an AMBE encoding and decoding rate mode code corresponding to the AMBE encoding and decoding rate value. Correspondingly, the SDP parsing module is further configured to, if the AMBE encoding and decoding rate mode code is obtained, obtain the AMBE encoding and decoding rate value by querying correspondence between the AMBE encoding and decoding rate mode code and the AMBE encoding and decoding rate value.

Furthermore, the SDP parsing module is further configured to obtain AMBE encoding and decoding rate switching information from the format specific parameter field of the fmtp attribute of the a attribute line.

Furthermore, the AMBE encoding and decoding rate switching information includes a minimum AMBE encoding and decoding rate switching time interval, an AMBE encoding and decoding rate switching constraint, and/or an AMBE encoding and decoding rate switching direction.

The receiver device may conveniently and flexibly execute corresponding rate switching according to a limitation and a constraint of the rate switching in the bearer plane in the session by obtaining the AMBE encoding and decoding rate switching information in the SDP.

It should be noted that:
1. It is described in the embodiments that a caller and a callee exchange AMBE encoding and decoding media information through an SDP in INVITE and 200OK of an SIP protocol, but an AMBE media information exchange manner in the present invention is not limited to the INVITE and 200OK messages, which are merely examples. The AMBE media information exchange manner in the present invention entirely complies to the description of media information negotiation in the RFC 3261 standard protocol.
2. In the embodiments, merely the description of AMBE 4 kbps and 2.45 kbps is provided. Because the AMBE is multi-rate encoding and decoding, the present patent is definitely also applicable to AMBE at other rates, which include, but are not limited to, 1.2 kbps and 4.8 kbps, and so on.
3. In the embodiments, merely the description of the AMBE encoding and decoding is provided, but the method in the present patent is also applicable to a latest encoding and decoding version AMBE+2 of the AMBE, which is a latest standard of the AMBE encoder series. The present patent is applicable to all AMBE encoding and decoding series versions.

Persons of ordinary skill in the art may understand that all or part of the steps in the foregoing method embodiments may be implemented by a program instructing relevant hardware. The program may be stored in a computer readable storage medium. When the program is run, the steps of the foregoing method embodiments are performed. The storage medium includes any medium that is capable of storing program codes, such as a ROM, a RAM, a magnetic disk, or an optical disk.

Finally, it should be noted that the foregoing embodiments are merely intended for describing the technical solutions of the present invention, rather than limiting the present invention. Although the present invention is described in detail with reference to the foregoing embodiments, persons of ordinary skill in the art should understand that they may still make modifications to the technical solutions described in the foregoing embodiments, or make equivalent replacements to part or all of the technical features of the technical solutions described in the foregoing embodiments; however, these modifications or replacements do not make the essence of the corresponding technical solutions depart from the scope of the technical solutions of the embodiments of the present invention.

## Claims

1. A method for identifying advanced multiband excitation vocoder AMBE encoding and decoding rate information in a session description protocol SDP, comprising:
setting an SDP, which specifically comprises: in an m attribute line of the SDP, using a payload type PT value to describe AMBE encoding and decoding; and in an fmtp attribute of an a attribute line of the SDP, identifying, in a format field, a PT value same as that of the m attribute line, and identifying AMBE encoding and decoding rate information in a format specific parameter field; and
sending the set SDP to a peer end.

2. The method for identifying the AMBE encoding and decoding rate information in the SDP according to claim 1, wherein the identifying the AMBE encoding and decoding rate information in the format specific parameter field specifically comprises:
identifying an AMBE encoding and decoding rate mode code in the format specific parameter field, wherein the AMBE encoding and decoding rate mode code corresponds to an AMBE encoding and decoding rate value.

3. The method for identifying the AMBE encoding and decoding rate information in the SDP according to claim 1, wherein the identifying the AMBE encoding and decoding rate information in the format specific parameter field specifically comprises:
identifying an AMBE encoding and decoding rate value in the format specific parameter field.

4. The method for identifying the AMBE encoding and decoding rate information in the SDP according to any one of claims 1 to 3, further comprising:
identifying AMBE encoding and decoding rate switching information in the format specific parameter field.

5. The method for identifying the AMBE encoding and decoding rate information in the SDP according to claim 1, wherein the identifying AMBE encoding and decoding rate switching information in the format specific parameter field specifically comprises:
identifying a minimum AMBE encoding and decoding rate switching time interval, an AMBE encoding and decoding rate switching constraint, and/or an AMBE encoding and decoding rate switching direction in the format specific parameter field.

6. A method for obtaining AMBE encoding and decoding rate information in an SDP, comprising:
parsing an SDP, and obtaining an m attribute line and an fmtp attribute of an a attribute line in the SDP; and
obtaining a PT value from the m attribute line, and obtaining AMBE encoding and decoding rate information from a format specific parameter field of the fmtp attribute of the a attribute line.

7. The method for obtaining the AMBE encoding and decoding rate information in the SDP according to claim 6, wherein the obtaining the AMBE encoding and decoding rate information from the format specific parameter field of the fmtp attribute of the a attribute line specifically comprises:
obtaining an AMBE encoding and decoding rate mode code from the format specific parameter field of the fmtp attribute of the a attribute line; and
obtaining an AMBE encoding and decoding rate value by querying correspondence between the AMBE encoding and decoding rate mode code and the AMBE encoding and decoding rate value.

8. The method for obtaining the AMBE encoding and decoding rate information in the SDP according to claim 6, wherein the obtaining the AMBE encoding and decoding rate information from the format specific parameter field of the fmtp attribute of the a attribute line specifically comprises:
obtaining an AMBE encoding and decoding rate value from the format specific parameter field of the fmtp attribute of the a attribute line.

9. The method for obtaining the AMBE encoding and decoding rate information in the SDP according to any one of claims 6 to 8, further comprising:
obtaining AMBE encoding and decoding rate switching information from the format specific parameter field of the fmtp attribute of the a attribute line.

10. The method for obtaining the AMBE encoding and decoding rate information in the SDP according to any one of claims 6 to 8, wherein the obtaining the AMBE encoding and decoding rate switching information from the format specific parameter field of the fmtp attribute of the a attribute line specifically comprises:
obtaining a minimum AMBE encoding and decoding rate switching time interval, an AMBE encoding and decoding rate switching constraint, and/or an AMBE encoding and decoding rate switching direction from the format specific parameter field of the fmtp attribute of the a attribute line.

11. A sender device, comprising:
an SDP generating module, configured to generate an SDP, wherein in an m attribute line of the SDP, a payload type PT value is used to describe AMBE encoding and decoding; and in an fmtp attribute of an a attribute line of the SDP, a payload type PT value same as that of the m attribute line is identified in a format field, and AMBE encoding and decoding rate information is identified in a format specific parameter field; and
an SDP sending module, configured to send the generated SDP to a receiver device.

12. The sender device according to claim 11, wherein the AMBE encoding and decoding rate information comprises an AMBE encoding and decoding rate value, or an AMBE encoding and decoding rate mode code corresponding to the AMBE encoding and decoding rate value.

13. The sender device according to claim 11 or 12, wherein the SDP generating module is further configured to identify AMBE encoding and decoding rate switching information in the format specific parameter field.

14. The sender device according to claim 13, wherein the AMBE encoding and decoding rate switching information comprises a minimum AMBE encoding and decoding rate switching time interval, an AMBE encoding and decoding rate switching constraint, and/or an AMBE encoding and decoding rate switching direction.

15. A receiver device, comprising:
an SDP receiving module, configured to receive an SDP sent by a sender device; and
an SDP parsing module, configured to parse the SDP, obtain an m attribute line and an fmtp attribute of an a attribute line in the SDP, obtain a PT value from the m attribute line, and obtain AMBE encoding and decoding rate information from a format specific parameter field of the fmtp attribute of the a attribute line.

16. The receiver device according to claim 15, wherein the AMBE encoding and decoding rate information comprises an AMBE encoding and decoding rate value, or an AMBE encoding and decoding rate mode code corresponding to the AMBE encoding and decoding rate value, and correspondingly, the SDP parsing module is further configured to, if the AMBE encoding and decoding rate mode code is obtained, obtain the AMBE encoding and decoding rate value by querying correspondence between the AMBE encoding and decoding rate mode code and the AMBE encoding and decoding rate value.

17. The receiver device according to claim 15 or 16, wherein the SDP parsing module is further configured to obtain AMBE encoding and decoding rate switching information from the format specific parameter field of the fmtp attribute of the a attribute line.

18. The receiver device according to claim 17, wherein the AMBE encoding and decoding rate switching information comprises a minimum AMBE encoding and decoding rate switching time interval, an AMBE encoding and decoding rate switching constraint, and/or an AMBE encoding and decoding rate switching direction.
